# FASCICULE DE BREVET EUROPEEN

(11) **EP 3 943 573 B1**
(45) Date de publication et mention de la délivrance du brevet: **25.02.2026**
(21) Numéro de dépôt: 20186887.4
(22) Date de dépôt: 21.07.2020
(51) Int. Cl.: C09K 11/02, C09K 11/77, A44C 27/00, G04B 37/22, B22F 1/00, C22C 1/00

(54) **MATERIAU METALLIQUE LUMINESCENT, PROCEDE DE PREPARATION ET UTILISATION**
LUMINESZIERENDES METALLMATERIAL, HERSTELLUNGSVERFAHREN UND VERWENDUNG
LUMINESCENT METAL MATERIAL, METHOD FOR PREPARING SAME AND USE THEREOF

(43) Date de publication de la demande: 26.01.2022
(73) Titulaire: Richemont International S.A., 1752 Villars-sur-Glâne (CH)
(72) Inventeur: GIRAUD, Damien, 90100 Joncherey (FR); DIOLOGENT, Frédéric, 2000 Neuchâtel (CH)
(74) Mandataire: Ipsilon

(56) Documents cités:
- EP-A1- 3 653 744
- WO-A1-2015/149879
- CH-B1- 714 899
- JP-A- 2000 026 902
- US-A1- 2011 305 919
- US-A1- 2020 157 009

## Description

### DOMAINE DE L'INVENTION

La présente invention concerne un matériau métallique luminescent obtenu à partir de particules métalliques et d'un pigment luminescent. Ce matériau peut notamment être utilisé dans l'horlogerie ou la joaillerie.

### ETAT ANTERIEUR DE LA TECHNIQUE

La luminescence correspond à l'émission de lumière de manière rapide (fluorescence) ou plus lente (phosphorescence) suite à l'excitation d'un composé chimique par absorption de photons. Certains composés phosphorescents peuvent ainsi émettre pendant plusieurs heures après avoir été initialement excités par exposition à un rayonnement électromagnétique.

Les matériaux luminescents présentent donc la particularité d'émettre de la lumière dans l'obscurité, ce qui peut s'avérer intéressant, que ce soit pour des raisons esthétiques ou fonctionnelles.

Ainsi, dans le domaine de l'horlogerie, intégrer un matériau luminescent dans les aiguilles ou les repères du cadran d'une montre permet ou facilite la lecture de l'heure dans l'obscurité.

A titre d'exemple, WO 2014/72388 décrit un matériau composite céramique phosphorescent ayant au moins deux phases. Ce matériau est obtenu par 1) un frittage dans une atmosphère oxydante, et 2) un frittage dans une atmosphère réductrice à une température plus élevée.

EP 3 395 784 décrit un matériau céramique comprenant 5%pds ou moins d'un métal noble.

EP 3 572 209 décrit un procédé de préparation d'un matériau composite par imprégnation d'un renfort (matière céramique, métallique ou organique) avec une matrice (résine synthétique) pouvant comprendre un composé phosphorescent.

EP 3 653 744 décrit un matériau composite ayant un aspect grenu. Ce matériau comprend 50 à 95 vol% d'une matrice métallique et des particules céramiques. Il ne s'agit pas d'un matériau comprenant au moins 14 carats de métal.

JP 2000-026902 décrit un matériau obtenu par frittage d'une poudre d'acier inoxydable. WO 2015/149879 décrit un matériau composite luminescent à base d'alliage de nickel ou de cobalt, d'acier, de métal dur, de métal réfractaire, de carbure ou de nitrure.

US 2011/305919 décrit un substrat métallique comprenant une couche métallique contenant des particules luminescentes.

Quand bien même ces matériaux présentent des propriétés luminescentes, il existe un besoin de disposer d'alternatives faciles à préparer, notamment pour des matériaux comprenant un métal noble.

La présente invention concerne un matériau luminescent à base de métal noble et son procédé de fabrication.

### EXPOSE DE L'INVENTION

Le matériau luminescent selon l'invention est à base d'un métal choisi parmi l'or, le platine, le palladium ou l'argent.

Plus précisément, la présente invention concerne un matériau luminescent pour l'horlogerie ou la joaillerie constitué de :
- 5 à 40 % de pigment luminescent,
- 60 à 95 % d'une matrice métallique,

les pourcentages étant exprimés par rapport au volume du matériau,
la matrice métallique étant constituée d'un métal M pur ou d'un alliage de métal M,
le métal M étant choisi dans le groupe constitué par l'or, le platine, le palladium et l'argent,
le matériau luminescent comprenant, pour 24 parts en poids, au moins 14 parts de métal M.

Le matériau luminescent selon l'invention est constitué d'au moins un type de pigment luminescent (luminophore) et d'une matrice métallique. Le matériau luminescent (matrice métallique + pigment luminescent) n'est pas un matériau céramique. En effet, il n'est pas obtenu par céramisation, il est obtenu à partir d'un mélange de particules métalliques et de pigments luminescents. Cependant, le pigment luminescent peut être un matériau céramique. Le matériau luminescent selon l'invention peut donc être un cermet (céramique-métal).

En d'autres termes, il ne comprend pas d'autres éléments, outre d'éventuelles impuretés qui ne dépassent 10 ppm en poids du matériau luminescent.

L'alliage de métal M comprend, pour 24 parts en poids, au moins 14 parts de métal M, avantageusement 14 à 23 parts, plus avantageusement 18 à 23 parts. Cela inclut notamment l'or (plus de 14 carats à 24 carats) ou l'argent 925 (alliage comprenant au moins 92,5% en poids d'argent).

De manière avantageuse, la matrice métallique représente 58,5 à 95,9 %, par rapport au poids du matériau luminescent, plus avantageusement 85 à 95 %.

Ainsi, le pigment luminescent représente avantageusement 4,1 à 41,5 %, par rapport au poids du matériau luminescent, plus avantageusement 5 à 15 %.

Le matériau selon l'invention est luminescent c'est-à-dire phosphorescent ou fluorescent. Il est préférentiellement phosphorescent.

Le matériau luminescent selon l'invention présente une porosité avantageusement inférieure à 5%, plus avantageusement inférieure à 1%.

Le cas échéant, la taille médiane de pores est avantageusement inférieure à 100 micromètres, plus avantageusement inférieure à 50 µm, et encore plus avantageusement inférieure à 20 µm.

Le matériau luminescent selon l'invention est constitué de pigment luminescent et d'une matrice métallique dans laquelle le pigment luminescent est dispersé.

En d'autres termes, il ne s'agit pas d'un luminophore comprenant un pigment luminescent et des particules métalliques intimement mélangées. En effet, lors de la préparation du matériau, les particules métalliques coalescent entre elles et forment une matrice intégrant le pigment luminescent.

Le pigment luminescent représente avantageusement 5 à 40 %, plus avantageusement 10 à 30%, par rapport au volume du matériau luminescent selon l'invention.

Le pigment luminescent est généralement un composé inorganique. Il peut notamment être choisi dans le groupe comprenant le tungstate de calcium (CaWO₄) ; le sulfure de zinc cadmié (ZnSO₃:Cd) ; l'iodure de césium (CsI) ; le sulfate de baryum (BaSO₄) ; les oxydes dopés, notamment les oxydes dopés terre rare ; les sels de terres rares (avantageusement gadolinium, lanthane, ou tantale), notamment les sels de terres rares dopés avec de l'yttrium ; et leurs mélanges.

De manière avantageuse, le pigment luminescent peut être enrobé par une céramique. Le cas échéant, cet enrobage peut être utile pour améliorer la résistance du pigment luminescent aux températures atteintes lors de la préparation du matériau luminescent selon l'invention.

Selon un mode de réalisation préféré, il s'agit de l'aluminate de strontium (SrAl₂O₄) dopé terre rare (scandium, yttrium et lanthanides, par exemple europium ou dysprosium).

La matrice métallique représente avantageusement 60 à 95 %, plus avantageusement 70 à 90%, par rapport au volume du matériau luminescent selon l'invention.

Comme déjà indiqué, le métal M est choisi dans le groupe constitué de l'or, le platine, le palladium, l'argent et leurs mélanges. Il s'agit préférentiellement d'or.

L'or et ses alliages désignent l'or de plus de 14 carats à l'or 24 carats, préférentiellement de l'or de 18 à 24 carats, plus préférentiellement 18 à 22 carats.

De manière générale, l'homme du métier ajustera le rapport métal M/pigment luminescent pour obtenir un matériau luminescent ayant une quantité de métal M comprise avantageusement entre 14 carats et 22 carats, préférentiellement entre 18 et 22 carats, par rapport au matériau luminescent (24 carats).

Le rapport volumique entre la matrice métallique et le pigment luminescent permet d'obtenir un matériau ayant l'aspect visuel du métal, ou de l'alliage, en conditions normales d'éclairage, et un matériau luminescent dans l'obscurité.

Le matériau luminescent peut comprendre une ou plusieurs parties luminescentes, par exemple sous la forme d'au moins une couche luminescente. Il peut également s'agir d'un matériau à gradient de luminescence.

La présente invention concerne également le procédé de préparation de ce matériau luminescent. Ce procédé comprend les étapes suivantes :
- préparation d'un mélange contenant au moins un pigment luminescent et des particules métalliques,
   les particules métalliques étant constituées d'un métal M pur ou d'un alliage de métal M,
   le métal M étant choisi dans le groupe constitué par l'or, le platine, le palladium et l'argent,
   le mélange comprenant, pour 24 parts en poids, au moins 14 parts de métal M,
- optionnellement, compactage de ce mélange,
- traitement de frittage, avantageusement sous pression, de ce mélange à une température inférieure à la température de fusion du pigment luminescent.

Le Demandeur a remarqué qu'il était possible de former un luminophore (matériau luminescent) par frittage quand bien même ce matériau est majoritairement à base d'un métal M ayant un point de fusion élevé. Pour cela, le Demandeur a mis au point un procédé consistant à fritter des particules métalliques, sans dégrader les pigments luminescents.

Ce matériau luminescent est préférentiellement obtenu par densification d'un mélange pulvérulent.

De manière générale, le pigment luminescent et/ou les particules métalliques peuvent se présenter sous la forme de paillettes ou de particules tridimensionnelles, par exemple des particules sphériques.

Le pigment luminescent utilisé pour préparer le matériau luminescent se présente sous la forme de particules. Il présente une taille moyenne en nombre avantageusement comprise entre 1 et 100 µm.

En général, une granulométrie de l'ordre de 1 à 20 µm permet d'obtenir un matériau luminescent ayant un aspect visuel homogène alors qu'une granulométrie supérieure à 50 µm procure un effet étoilé.

De manière générale, le procédé de préparation du matériau luminescent ne modifie pas la taille du pigment luminescent.

Comme déjà indiqué, le traitement thermique est réalisé à une température inférieure à la température de fusion du pigment luminescent. Ainsi, le pigment luminescent est englobé dans une matrice métallique.

Les particules métalliques utilisées pour préparer le matériau luminescent présentent une taille médiane en nombre (D50) avantageusement comprise entre 1 et 200 µm, plus avantageusement entre 5 et 100 µm.

Les particules métalliques et/ou le pigment luminescent peuvent se présenter sous la forme d'une poudre, par exemple une poudre d'or pour les particules métalliques.

Les dimensions (par exemple la taille) des particules (métalliques ou luminescentes) peuvent être mesurées selon les techniques conventionnelles utilisées par l'homme du métier, par exemple par granulométrie laser (Malvern). Avec un système optique adapté, le facteur de forme peut être déterminé, la densité peut également être déterminée par pycnomètre à gaz ou par BET, technologie basée sur la théorie Brunauer, Emmett et Teller. La morphologie des grains peut être déterminée par MEB (microscopie électronique à balayage).

Comme déjà indiqué, les particules d'or utilisées pour préparer le mélange sont avantageusement à base d'or 18 carats à 24 carats, préférentiellement de l'or 20 ou 22 carats. Il peut s'agir d'un alliage d'or de couleur, par exemple jaune, blanc, rouge ou rose.

Le procédé de préparation du matériau luminescent n'entrainant pas de perte ou de gain de matière, le rapport en poids entre le métal (ou son alliage) et le pigment luminescent est le même dans le mélange (avant le traitement thermique) et dans le matériau final.

Le mélange du pigment luminescent et des particules métalliques peut être réalisé au moyen de tout dispositif conventionnel. Il peut donc être réalisé manuellement ou mécaniquement.

De manière avantageuse, un mélangeur automatique est utilisé, par exemple de type turbula. Ce type d'appareil permet d'améliorer l'homogénéité du mélange et, par conséquent, du matériau luminescent.

Selon un autre mode de réalisation, le mélange peut être réalisé au moyen d'un broyeur. Le cas échéant, l'homme du métier saura choisir l'agent de broyage (grinding medium) adapté afin de préserver les propriétés physiques initiales (forme et taille) du pigment luminescent et des particules métalliques.

Le traitement de frittage est avantageusement réalisé à une température comprise entre 300 et 1400 °C, plus avantageusement entre 500 et 800 °C, encore plus avantageusement entre 600 et 700 °C.

Préalablement au traitement de frittage, le mélange est préférentiellement compacté. Le compactage est avantageusement réalisé par mise sous pression du mélange, entre 5 et 1500 MPa, plus avantageusement entre 10 et 1200 MPa, encore plus avantageusement entre 20 et 500MPa. Il s'agit de la pression appliquée sur le mélange avant le traitement de frittage. Elle est avantageusement identique à celle pouvant être exercée lors du traitement de frittage.

Le traitement de frittage est avantageusement réalisé à une pression comprise entre 5 et 1500 MPa, plus avantageusement entre 10 et 1200 MPa, encore plus avantageusement entre 20 et 500 MPa.

Le traitement de frittage SPS est réalisé pendant une durée avantageusement comprise entre 1 minute et 45 minutes, plus avantageusement entre 5 minutes et 15 minutes.

Ainsi, le traitement thermique peut avantageusement correspondre à une séquence 1) de compactage et 2) de frittage ou à une séquence 1) de compactage et 2) de frittage + compactage. Il est avantageusement réalisé par frittage flash (SPS « spark plasma sintering ») consistant à réaliser le frittage sous pression.

Selon un autre mode de réalisation, le traitement de frittage peut être réalisé au moyen d'une presse à chaud, d'une presse à froid, par passage dans un four (à la pression atmosphérique, avantageusement après une étape de compactage), par fabrication additive, par projection thermique, ou par pulvérisation simultanée d'une poudre de particules métalliques et d'une poudre de pigment luminescent.

La formation du matériau luminescent par pulvérisation d'une poudre de particules métalliques et d'une poudre de pigment luminescent peut consister à former le mélange particules métalliques/pigment luminescent lors de la pulvérisation des poudres et de leur dépôt sur un substrat. Le traitement de frittage peut être réalisé après le dépôt du mélange de poudre sur un substrat par les techniques conventionnelles (laser, SPS...). Cependant, et préférentiellement, le traitement de frittage est réalisé lors de la pulvérisation des poudres, par exemple par co-projection des poudres de manière coaxiale avec un laser qui permet la fonte les particules métalliques.

Ainsi, le procédé selon l'invention peut consister à déposer des pigments, ou le mélange (particules métalliques + pigments luminescents), selon un motif prédéfini tel qu'un logo ou une représentation graphique, ce motif étant observable dans l'obscurité après absorption de photons.

La réalisation du traitement thermique par SPS procure de nombreux avantages, par exemple, une montée en température plus rapide et une durée de traitement plus courte par rapport aux procédés conventionnels tels que le pressage à chaud. En effet, dans le SPS, le mélange est chauffé par effet Joule et par conduction, grâce à un courant électrique. Ce phénomène permet d'abaisser la température de frittage, sa durée et, ainsi, d'éviter la dégradation des pigments luminescents.

De manière générale, un traitement par SPS nécessite un dispositif de pressage de poudre assisté d'un courant électrique.

Même si les pigments luminescents ne sont généralement pas conducteurs électrique, le courant électrique passe par les particules métalliques conductrices (or, platine, palladium, argent et leurs alliages), provoquant leur échauffement ainsi que celui des pigments luminescents adjacents.

La présente invention concerne également l'utilisation de ce matériau luminescent dans l'horlogerie ou dans la joaillerie, notamment un article d'horlogerie ou de joaillerie comprenant le matériau luminescent. Il peut s'agir d'aiguilles de montre ou de repères sur un cadran de montre mais également d'un fond de boite de montre, d'une carrure de boite de montre, d'une lunette de boite de montre, d'un poussoir de montre, d'une couronne de montre ou d'un bracelet articulé de montre.

Cet article comprend donc le matériau luminescent, qui peut avoir été préalablement usiné, et éventuellement poli, notamment par polissage ionique.

La luminescence du matériau peut résulter de son exposition à une source de lumière naturelle et/ou artificielle. Il peut notamment s'agir d'une exposition à un rayonnement ultraviolet.

De manière générale, la longueur d'onde d'absorption du pigment luminescent ne correspond pas nécessairement à sa longueur d'onde d'émission.

La présente invention et les avantages qui en découlent ressortiront mieux de la figure et des exemples suivants donnés afin d'illustrer l'invention et non de manière limitative.

### DESCRIPTION DES FIGURES

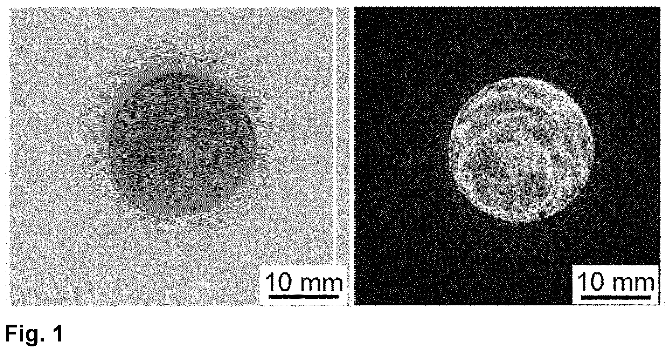

La figure 1 illustre le matériau luminescent selon l'invention exposé à la lumière naturelle et dans l'obscurité.

### EXEMPLES DE REALISATION DE L'INVENTION

Un matériau luminescent (figure 1) a été préparé selon les étapes suivantes :
- préparation d'une poudre d'or 18 carats ayant un diamètre de particules d₅₀ de 16 µm, d₁₀ de10 µm et d₉₀ de 52 µm (dₓₓ : XX% de particule inférieure à ce nombre), par atomisation gazeuse,
- préparation d'un mélange de 75% en volume de poudre d'or 18 carats et de 25% en volume de pigment luminescent (aluminate de strontium dopé europium ou dysprosium), la quantité de pigment représentant 9,5% par rapport au poids du mélange,
- compaction/frittage par SPS de ce mélange
- obtention d'un matériau luminescent sous forme d'une pastille.

Les conditions du traitement par SPS sont les suivantes :
- appliquer, sur le mélange, une pression de 16 kN au moyen d'un piston de 2 cm de diamètre,
- chauffer le mélange à 450 °C pendant 5 min,
- atteindre 630 °C (100 °C/min) et maintenir à 630 °C pendant 2 minutes,
- stopper le traitement thermique,
- laisser l'échantillon reposer pendant 2 minutes avant de relâcher la pression,
- laisser l'échantillon refroidir.

Ainsi, le matériau luminescent est obtenu sous la forme d'une pastille en moins de 10 minutes.

Après avoir été exposé à moins de 5 cm d'une source de lumière artificielle pendant 20 secondes, le matériau ainsi obtenu est luminescent pendant plusieurs dizaines de minutes.

## Revendications

1. Matériau luminescent pour l'horlogerie ou la joaillerie, constitué de :
- 5 à 40 % de pigment luminescent présentant une taille moyenne en nombre comprise entre 1 et 100 µm,
- 95 à 60 % d'une matrice métallique,
les pourcentages étant exprimés par rapport au volume du matériau,
la matrice métallique étant constituée d'un métal M pur ou d'un alliage de métal M,
le métal M étant choisi dans le groupe constitué par l'or, le platine, le palladium et l'argent,
le matériau luminescent comprenant, pour 24 parts en poids, au moins 14 parts de métal M.

2. Matériau luminescent selon la revendication 1, ***caractérisé* en ce que** le métal représente 58,5 à 95,9 %, par rapport au poids du matériau luminescent.

3. Matériau luminescent selon la revendication 1 ou 2, ***caractérisé* en ce que** le pigment luminescent est SrAl₂O₄ dopé terre rare.

4. Matériau luminescent selon l'une des revendications 1 à 3, ***caractérisé* en ce que** le métal M est de l'or.

5. Matériau luminescent selon l'une des revendications 1 à 3, ***caractérisé* en ce que** le pigment luminescent représente 10 à 30%, par rapport au volume du matériau luminescent.

6. Article d'horlogerie ou de joaillerie comprenant le matériau luminescent objet de l'une des revendications 1 à 5.

7. Article selon la revendication 6, ***caractérisé* en ce qu'**il s'agit d'aiguilles de montre, de repères sur un cadran de montre, d'un fond de boite de montre, d'une carrure de boite de montre, d'une lunette de boite de montre, d'un poussoir de montre, d'une couronne de montre ou d'un bracelet articulé de montre.

8. Procédé de préparation du matériau luminescent objet de l'une des revendications 1 à 5, selon les étapes suivantes :
- préparation d'un mélange contenant au moins un pigment luminescent et des particules métalliques, le pigment luminescent présentant une taille moyenne en nombre comprise entre 1 et 100 µm,
les particules métalliques étant constituées d'un métal M pur ou d'un alliage de métal M,
le métal M étant choisi dans le groupe constitué par l'or, le platine, le palladium et l'argent,
le mélange comprenant, pour 24 parts en poids, au moins 14 parts de métal M.
- traitement de frittage, avantageusement sous pression, de ce mélange à une température inférieure à la température de fusion du pigment luminescent.

9. Procédé selon la revendication 8, ***caractérisé* en ce que** le mélange soumis à une étape de compactage préalablement au traitement de frittage.

10. Procédé selon l'une des revendications 8 à 9, ***caractérisé* en ce que** le mélange est mis en forme préalablement au traitement de frittage.

11. Procédé selon l'une des revendications 8 à 10, ***caractérisé* en ce que** le traitement de frittage est réalisé sous une pression comprise entre 5 et 1500 MPa.

12. Procédé selon l'une des revendications 8 à 11, ***caractérisé* en ce que** le traitement de frittage est réalisé à une température comprise entre 300 °C et 400 °C.

13. Procédé selon l'une des revendications 8 à 12, ***caractérisé* en ce que** le mélange soumis à une étape de compactage sous une pression comprise entre 5 et 1500 MPa, préalablement au traitement de frittage.

14. Procédé selon l'une des revendications 8 à 13, ***caractérisé* en ce que** le traitement de frittage est réalisé par frittage flash.

15. Procédé selon la revendication 8, ***caractérisé* en ce que** le traitement de frittage est réalisé au moyen d'une presse à chaud, au moyen d'une presse à froid, par passage dans un four, par fabrication additive, par projection thermique, ou par pulvérisations d'une poudre de particules métalliques et d'une poudre de pigment luminescent simultanément.

## Patentansprüche

1. Lumineszierendes Material für die Uhren- oder Schmuckherstellung, bestehend aus:
- 5 bis 40 % lumineszierendem Pigment mit einer zahlenmäßigen durchschnittlichen Größe zwischen 1 und 100 µm,
- 95 bis 60 % einer Metallmatrix,
wobei die prozentualen Anteile bezogen auf das Materialvolumen angegeben sind,
wobei die Metallmatrix aus einem reinen Metall M oder einer Legierung aus Metall M besteht,
wobei das Metall M aus der Gruppe bestehend aus Gold, Platin, Palladium und Silber ausgewählt ist,
wobei das lumineszierende Material für 24 Gewichtsteile mindestens 14 Teile Metall M umfasst.

2. Lumineszierendes Material nach Anspruch 1, ***dadurch gekennzeichnet, dass*** das Metall 58,5 bis 95,9 % bezogen auf das Gewicht des lumineszierenden Materials ausmacht.

3. Lumineszierendes Material nach Anspruch 1 oder 2, ***dadurch gekennzeichnet, dass*** das lumineszierende Pigment mit Seltenen Erden dotiertes SrAl2O4 ist.

4. Lumineszierendes Material nach einem der Ansprüche 1 bis 3, ***dadurch gekennzeichnet, dass*** das Metall M Gold ist.

5. Lumineszierendes Material nach Anspruch 1, ***dadurch gekennzeichnet, dass*** das lumineszierende Pigment 10 bis 30 % bezogen auf das Volumen des lumineszierenden Materials ausmacht.

6. Uhren- oder Schmuckartikel, der das lumineszierende Material nach einem der Ansprüche 1 bis 5 umfasst.

7. Artikel nach Anspruch 6, ***dadurch gekennzeichnet, dass*** es sich um Uhrzeiger, Markierungen auf einem Zifferblatt, einen Uhrengehäuseboden, ein Uhrengehäuse, eine Uhrengehäuselünette, einen Uhrendrücker, eine Uhrenkrone oder ein Uhrenarmband handelt.

8. Verfahren zur Herstellung des lumineszierenden Materials nach einem der Ansprüche 1 bis 5, das die folgenden Schritte umfasst:
- Herstellung einer Mischung, die mindestens ein lumineszierendes Pigment und Metallpartikel enthält, wobei das lumineszierende Pigment eine zahlenmäßige durchschnittliche Größe zwischen 1 und 100 µm aufweist,
wobei die Metallpartikel aus einem reinen Metall M oder einer Legierung aus Metall M bestehen,
wobei das Metall M aus der Gruppe bestehend aus Gold, Platin, Palladium und Silber ausgewählt ist,
wobei die Mischung für 24 Gewichtsteile mindestens 14 Teile Metall M umfasst,
- Sinterbehandlung dieser Mischung, vorzugsweise unter Druck, bei einer Temperatur unterhalb der Schmelztemperatur des lumineszierenden Pigments.

9. Verfahren nach Anspruch 8, ***dadurch gekennzeichnet, dass*** die Mischung vor der Sinterbehandlung einem Verdichtungsschritt unterzogen wird.

10. Verfahren nach einem der Ansprüche 8 bis 9, ***dadurch gekennzeichnet, dass*** die Mischung vor der Sinterbehandlung geformt wird.

11. Verfahren nach einem der Ansprüche 8 bis 10, ***dadurch gekennzeichnet, dass*** die Sinterbehandlung unter einem Druck zwischen 5 und 1500 MPa durchgeführt wird.

12. Verfahren nach einem der Ansprüche 8 bis 11, ***dadurch gekennzeichnet, dass*** die Sinterbehandlung bei einer Temperatur zwischen 300 °C und 400 °C durchgeführt wird.

13. Verfahren nach einem der Ansprüche 8 bis 12, ***dadurch gekennzeichnet, dass*** die Mischung vor der Sinterbehandlung einem Verdichtungsschritt unter einem Druck zwischen 5 und 1500 MPa unterzogen wird.

14. Verfahren nach einem der Ansprüche 8 bis 13, ***dadurch gekennzeichnet, dass*** die Sinterbehandlung im Flash-Sinterverfahren durchgeführt wird.

15. Verfahren nach Anspruch 8, ***dadurch gekennzeichnet, dass*** die Sinterbehandlung mittels einer Heißpresse, einer Kaltpresse, durch Einbringen in einen Ofen, durch additive Fertigung, durch thermisches Spritzen oder durch gleichzeitiges Aufsprühen eines Metallpartikelpulvers und eines lumineszierenden Pigmentpulvers durchgeführt wird.

## Claims

1. Luminescent material for horology or jewelry, consisting of:
- 5 to 40% luminescent pigment having an average number size between 1 and 100 µm,
- 95 to 60% of a metallic matrix,
the percentages being relative to the volume of the material,
the metallic matrix consisting of a pure metal M or an alloy of metal M,
metal M being chosen from the group consisting of gold, platinum, palladium and silver,
the luminescent material comprising, for 24 parts by weight, at least 14 parts of metal M.

2. Luminescent material according to claim 1, **characterized in that** the metal represents 58.5 to 95.9%, relative to the weight of the luminescent material.

3. Luminescent material according to claim 1 or 2, **characterized in that** the luminescent pigment is rare earth doped SrAl₂O₄.

4. Luminescent material according to any one of claims 1 to 3, **characterized in that** the metal M is gold.

5. Luminescent material according to any one of claims 1 to 3, **characterized in that** the luminescent pigment represents 10 to 30%, relative to the volume of the luminescent material.

6. Article of horology or jewelry comprising the luminescent material of any one of claims 1 to 5.

7. Article according to claim 6, **characterized in that** it consists of watch hands, markers on a watch dial, a watch case back, a watch case middle, a watch case bezel, a watch pusher, a watch crown or an articulated watch bracelet.

8. A method for preparing the luminescent material of any one of claims 1 to 5, according to the following steps:
- preparing a mixture containing at least one luminescent pigment and metallic particles,
the luminescent pigment having an average number size of between 1 and 100 µm,
the metallic particles consisting of a pure metal M or an alloy of metal M,
the metal M being chosen from the group consisting of gold, platinum, palladium and silver,
the mixture comprising, for 24 parts by weight, at least 14 parts of metal M.
- sintering treatment, advantageously under pressure, of this mixture at a temperature lower than the melting temperature of the luminescent pigment.

9. Process according to claim 8, **characterized in that** the mixture is subjected to a compaction step prior to the sintering treatment.

10. A process according to any one of claims 8 to 9, **characterized in that** the mixture is shaped prior to the sintering treatment.

11. A process according to any one of claims 8 to 10, **characterized in that** the sintering treatment is carried out under a pressure between 5 and 1500 MPa.

12. A process according to any one of claims 8 to 11, **characterized in that** the sintering treatment is carried out at a temperature between 300 °C and 400 °C.

13. A process according to any one of claims 8 to 12, **characterized in that** the mixture is subjected to a compaction step under a pressure between 5 and 1500 MPa, prior to the sintering treatment.

14. A process according to any one of claims 8 to 13, **characterized in that** the sintering treatment is carried out by flash sintering.

15. A process according to claim 8, **characterized in that** the sintering treatment is carried out by means of a hot press, by means of a cold press, by passing through an oven, by additive manufacturing, by thermal projection, or by simultaneously spraying a powder of metallic particles and a powder of luminescent pigment.
